# FASCICULE DE BREVET EUROPEEN

(11) **EP 1 687 085 B1**
(45) Date de publication et mention de la délivrance du brevet: **14.09.2011**
(21) Numéro de dépôt: 04805467.0
(22) Date de dépôt: 17.11.2004
(51) Int. Cl.: B01J 27/32

(54) **REGENERATION HORS SITE DE CATALYSEURS DE REFORMAGE**
OFF-SITE-REGENERATION VON REFORMIERKATALYSATOREN
OFF-SITE REGENERATION OF REFORMING CATALYSTS

(30) Priorité: 20.11.2003 FR 0313594
(43) Date de publication de la demande: 09.08.2006
(73) Titulaire: EURECAT S.A., 07800 La Voulte-sur-Rhône (FR)
(72) Inventeur: DUFRESNE, Pierre, F-26000 Valence (FR); GALLIOU, Pauline, F-38150 Chanas (FR); BERGOUGNOU, Jean Denis, F-26270 Loriol (FR); LENAIN, Gérard, F-26120 Montmeyran (FR)
(74) Mandataire: Schmitt, Nicolas A.J.
(86) Numéro de dépôt international: PCT/FR2004/002930
(87) Numéro de publication internationale: WO 2005/053841

(56) Documents cités:
- EP-A- 0 710 502
- US-A- 4 810 686
- US-A- 4 835 129
- US-A- 5 573 988
- US-A- 5 866 495

## Description

### OBJET DE L'INVENTION

La présente invention concerne un procédé de régénération de catalyseurs de réformage catalytique. Le catalyseur comprend au moins un métal qui peut être un métal du groupe VIII de la classification périodique des éléments, notamment un métal noble de ce groupe VIII, ou encore l'argent ou l'or. On utilise de préférence le platine. Le catalyseur contient éventuellement au moins un métal additionnel choisi dans le groupe formé par les métaux des groupes 7, 8, 9, 10, 13 et 14 de la classification périodique des éléments et le cuivre ; il contient en outre du chlore et au moins un support poreux, amorphe, à base d'alumine. Les catalyseurs de réformage les plus utilisés contiennent du platine, associé soit à de l'étain, soit à du rhénium, déposé sur une alumine de type gamma.

Le procédé de réformage catalytique est un procédé très largement utilisé par les raffineurs pour valoriser l'essence lourde obtenue par distillation, d'indice d'octane faible. La transformation chimique de la charge d'essence lourde comportant principalement des hydrocarbures contenant de 7 à 10 atomes de carbone par molécule consiste principalement en la transformation des n-paraffines et des naphtènes compris dans la charge en hydrocarbures aromatiques, par des réactions dont les plus recherchées sont fortement endothermiques. Ladite transformation, appelée réformage catalytique, est obtenue généralement à haute température (de l'ordre de 500°C), à pression basse à moyenne (3,5 à 25.10⁵Pa) et en présence d'un catalyseur. Elle produit du réformat, un gaz riche en hydrogène, du gaz combustible (C₁-C₂) et des gaz liquéfiés (C₃+C₄) ainsi que du coke.

Le catalyseur de réformage est généralement un solide poreux sous la forme de petits bâtonnets (extrudés), de billes ou de grains, et comprend de l' alumine, du chlore, du platine et un métal additionnel choisi dans le groupe formé par les métaux des groupes 7, 8, 9, 10, 13 et 14 de la classification périodique des éléments et le cuivre, tel que le thallium, le manganèse, le germanium, l'indium, l'iridium, le rhénium ou l'étain, de préférence le rhénium ou l'étain. Le catalyseur de réformage est un produit très élaboré dont le coût est très élevé compte tenu de l'utilisation de métal (métaux) précieux.

Au cours du procédé de réformage catalytique, l'activité du catalyseur se réduit progressivement principalement par dépôt de coke à la surface. Il est donc nécessaire périodiquement de procéder à une opération de régénération qui comprend principalement l'élimination du coke par brûlage contrôlé, généralement en présence d'air dilué par l'azote (opération appelée ci-après combustion du coke) et l'oxychloration, qui permet principalement de redisperser les métaux mais aussi d'ajuster l'acidité de l'alumine par ajout en milieu oxydant de chlore ou de composé organique chloré (opération appelée ci-après oxychloration).

L'opération conventionnelle de régénération du catalyseur de réformage a lieu in-situ, c'est-à-dire sur le site des raffineries (sur site), et elle est conduite différemment selon le procédé de réformage catalytique utilisé.

Dans le cas où le procédé de réformage catalytique est un procédé de type continu ou CCR, c'est-à-dire Continuous Catalytic Reforming, le catalyseur s'écoule progressivement (lit circulant) dans les zones de réaction dans lesquelles s'écoule la charge et où se produisent les réactions chimiques associées au réformage catalytique, puis est soutiré de la dernière zone de réaction pour être dirigé vers une zone de régénération (tel que dans le brevet US-5,034,117).

La durée d'un cycle (réaction + régénération) pour le catalyseur est généralement comprise entre 0.1 et 10 jours. Dans la zone de régénération, le catalyseur est tout d'abord généralement stocké dans un ballon d'accumulation puis amené dans la zone de régénération proprement dite où il est procédé à la combustion du coke, puis à l'oxychloration. Le catalyseur est reconduit dans la première zone de réaction, généralement après passage dans un ballon d'accumulation, après une opération de réduction qui permet de mettre le catalyseur dans un état où il sera actif pour la réaction de réformage et éventuellement une opération de sulfuration qui correspond à une passivation par le soufre du métal additionnel utilisé, laquelle opération a lieu selon la nature dudit métal (on procède à cette sulfuration par exemple pour le rhénium mais pas pour l'étain). Mais ladite opération de réduction ainsi que ladite opération éventuelle de sulfuration peuvent aussi avoir lieu dans la première zone de réaction. Finalement, dans ce cas, le catalyseur est régénéré dans une zone distincte des zones réactionnelles mais en contact direct avec celles-ci.

Dans le cas où le procédé de réformage est un procédé de type semi-régénératif (appelé aussi à lit fixe), le catalyseur est présent dans les zones réactionnelles dans lesquelles circule la charge, mais le catalyseur ne circule pas d'une zone réactionnelle à une autre pendant que se produisent les réactions chimiques associées au réformage catalytique. On procède dans ce cas périodiquement à la régénération, généralement pendant 7 à 10 voire 15 jours tous les 3 mois à 12 mois d'utilisation selon la sévérité des opérations. Le catalyseur reste en zone réactionnelle qui devient zone de régénération. Dans certains types de procédés comportant plusieurs zones réactionnelles, il est aussi possible d'isoler une zone réactionnelle des autres zones réactionnelles, de façon à ce qu'elle serve de zone de régénération pendant que les autres zones réactionnelles continuent à réaliser le réformage catalytique, mais alors on ne procède à la régénération que d'une partie du catalyseur présent dans toutes les zones réactionnelles. Ainsi dans ce cas le catalyseur est régénéré dans une zone qui est aussi zone réactionnelle.

Il existe aussi des cas où le procédé de réformage catalytique est un procédé de technologie mixte, c'est-à-dire qu'un même procédé associe des zones réactionnelles de technologie semi-régénérative et des zones réactionnelles de technologie continue. Dans ce cas, les deux types de régénération sont donc utilisés.

Ces procédés de réformage catalytique, classique et largement utilisées dans les raffineries, posent des inconvénients en cours de fonctionnement, dus principalement au manque de souplesse des systèmes de régénération utilisés.

En effet, la régénération dans un procédé de type CCR est en prise directe avec ce qui se passe dans les zones réactionnelles, et tout fonctionnement anormal desdites zones se répercute directement sur le fonctionnement de la zone de régénération, car la zone de régénération est généralement programmée uniquement pour un fonctionnement dans des conditions normales d'utilisation. Ainsi tout disfonctionnement, qui se traduit par une élévation de la teneur en coke du catalyseur à régénérer par rapport à la teneur de fonctionnement normal qui est généralement de 4 à 5 % poids de coke, impose soit de ralentir la vitesse de régénération du catalyseur pour éviter d'importants problèmes d'exothermicité en zone de régénération, ce qui se traduit globalement par une baisse du débit de charge et donc une baisse de production de l'unité, ce qui coûte très cher au raffineur ; soit de changer totalement le catalyseur et de céder le catalyseur usé (s'il n'est pas réutilisable) à une société de récupération du platine. D'autre part, la combustion du coke peut s'avérer incomplète.

Quant à la régénération dans un procédé de type semi-régénératif, elle impose une immobilisation de l'unité de production durant toute la durée de la régénération, ce qui coûte cher au raffineur, et ce d'autant plus longtemps qu'un dysfonctionnement des zones réactionnelles aura conduit à une teneur en coke plus élevée qu'en fonctionnement normal.

D'autre part, les régénérations dans de tels procédés de réformage catalytique posent aussi des problèmes techniques. Ainsi de telles régénérations impliquent l'utilisation d'air dilué par l'azote (à teneur en oxygène de 0,1 à 1% en volume) pour brûler le coke, en particulier lorsque les débits du gaz de combustion sont importants, ainsi que l'injection de composé chloré pendant ladite étape, ce qui pose des problèmes vis-à-vis de l'environnement. De plus, les régénérations conduites selon l'art antérieur dans les procédés de type continu (CCR) ou de type semi-régénératif ne permettent pas d'assurer de manière certaine une parfaite homogénéité de traitement de combustion ou d'oxychloration pour toutes les particules de catalyseurs. Enfin, de tels procédés de réformage catalytique comportant une régénération sur site ne permettent pas de qualifier la totalité du catalyseur car tout échantillon de catalyseur pris sur l'unité (en production et en régénération) est ponctuel et non représentatif de l'ensemble de la masse catalytique. Par exemple une combustion du coke incomplète sur l'ensemble de la masse catalytique pourrait ne pas se voir sur un échantillonnage du catalyseur. Or les procédés de réformage catalytique nécessitent plus particulièrement que d'autres procédés de raffinage et de pétrochimie une surveillance permanente et la plus exacte possible du catalyseur. Par ailleurs, dans l'art antérieur, on distingue essentiellement deux types de mise en oeuvre de la régénération. Dans certaines techniques la régénération est effectuée en lit mobile, le catalyseur circulant à travers des zones distinctes de combustion du coke et d'oxyhalogénation. Dans d'autres techniques, la régénération est effectuée dans un lit unique à lit fixe, chaque étape de régénération étant effectuée sur ce lit.

Les procédés de régénération hors-site de catalyseur existent en raffinage pour les catalyseurs usés issus de l'hydrotraitement. Ils comprennent principalement une étape de strippage des hydrocarbures résiduels, et une étape de combustion du soufre et du carbone. Mais ils ne comprennent pas d'étape d'oxyhalogénation. Les catalyseurs d'hydrotraitement, qui ne comportent généralement pas de métal précieux, ne subissent donc pas les mêmes traitements de régénération que les catalyseurs de réformage catalytique.

On a cherché à améliorer davantage la régénération hors-site afin de pouvoir proposer des méthodes de régénération hors-site de catalyseurs usés de réformage catalytique conduisant à des résultats techniques au moins aussi bons et le plus souvent meilleurs que les procédés conventionnels de régénération sur site des catalyseurs de réformage catalytique qui sont utilisés à l'heure actuelle.

Un autre objectif de l'invention est de pouvoir proposer des méthodes de régénération hors site de tout catalyseur usé de traitement d'hydrocarbures comprenant au moins un métal précieux, de préférence le platine, et pour lequel la régénération doit comporter au moins une étape de combustion du coke et une étape d'oxyhalogénation, de préférence d'oxychloration, pour redisperser ledit métal précieux. Le traitement de régénération selon l'invention permet d'éliminer la majeure partie du coke déposé sur le support et de redisperser la phase métallique.

L'invention concerne donc un procédé de régénération d'un catalyseur usé/de réformage, comprenant au moins un métal du groupe VIII de la classification périodique des éléments, notamment un métal noble de la famille du platine (palladium, platine, iridium, osmium, ruthénium, rhodium) ou l'argent ou l'or, éventuellement au moins un métal additionnel choisi dans le groupe formé par les métaux des groupes 7, 8, 9, 10, 13 et 14 de la classification périodique des éléments et le cuivre, du chlore et au moins un support poreux, amorphe et à base d'alumine. Le platine est le métal préféré, éventuellement accompagné à titre de métal additionnel , de rhénium ou d'étain.

Le brevet EP-B- 710502 de la demanderesse décrit un procédé de régénération hors-site qui comprend au moins les deux étapes successives suivantes :
- au moins une étape de combustion du coke présent sur ledit catalyseur en présence d'un gaz comprenant de l'oxygène, à température comprise entre 300 et 680°C, de préférence entre 350 et 550°C, de manière encore plus préférée entre 350 et 470°C, pour une durée comprise entre 0.3 et 7 heures,
- au moins une étape d'oxyhalogénation, de préférence d'oxychloration, sous atmosphère contrôlée d'air, à une température comprise entre 300 et 650°C, de préférence entre 350 et 550°C, pour une durée comprise entre 0,3 et 3 heures et en présence d'un composé halogéné ledit procédé est effectué hors-site et on utilise pour l'étape (1) de combustion et pour l'étape (2) d'oxyhalogénation un four choisi parmi les fours à lit mobile c'est à dire en mouvement.

Parmi les fours à lit mobile, on trouve les fours à lit agité, les fours à lit croulant (c'est-à-dire à couche mince, que le réacteur soit cylindrique ou qu'il soit radial), les fours à lit fluidisé ou d'autres fours comme les fours à lit circulant. Par exemple, on peut utiliser les fours de type rotolouvre (c'est-à-dire de type mobile, agité et à couche mince) ou de type four à bande (c'est-à-dire de type à couche mince et mobile).

Dans ce brevet, le catalyseur se déplace de la zone où a lieu l'étape de combustion vers la zone pour l'oxyhalogénation.

Le procédé selon l'invention est un perfectionnement de EP-B-710502, ce procédé est un procédé multi-étapes de régénération utilisant un réacteur unique ou four unique à lit fluidisé (ou plus généralement lit en mouvement même si par la suite, on parle conventionnellement de lit « fluidisé »). Le catalyseur usé est introduit dans ce réacteur et y subit successivement les étapes suivantes:
- (1) éventuel strippage sous air, sous azote, ou un mélange de ces deux gaz, (ledit strippage peut également avoir lieu en-dehors du présent réacteur).
- (2) combustion progressive du coke : cette étape (2) est une étape de combustion du coke présent sur ledit catalyseur en présence d'un gaz comprenant de l'oxygène moléculaire, par exemple de l'air éventuellement dilué par de l'azote, à température comprise entre 300 et 680 °C, de préférence entre 350 et 550°C, pour une durée comprise entre 0.5 et 10 heures. De façon préférée, l'étape 2 est effectuée à température variable, faible au début (250-450°C) sous air (éventuellement dilué d'azote), plus forte au palier final (500-550°C),
- (3) oxychloration du catalyseur à régénérer. Cette étape (3) est une étape d'oxychloration en présence d'un composé chloré sous atmosphère contrôlée d'air humide, à une température comprise entre 300 et 650°C. On notera que les deux étapes de combustion et d'oxyhalogénation contrairement à EP-B-710502, sont effectuées simultanément ou au moins partiellement ensemble, cette dernière possibilité étant parfois préférée ; dans ce cas donc, l'étape d'oxyhalogénation est au moins partiellement confondue ou entièrement confondue avec l'étape de combustion. L'étape d'oxyhalogénation éventuellement au moins partiellement confondue avec la fin de l'étape précédente, se distingue de la combustion par un ajout d'eau et de composé chloré pour redisperser les métaux. L'étape d'oxyhalogénation est éventuellement suivie d'une calcination, consistant à l'arrêt d'injection d'eau et de composé chloré, tout en maintenant ou augmentant le débit de gaz oxydant, de préférence de l'air.
- (4) réduction sous hydrogène pur ou dilué après purge à l'azote,
- (5) éventuelle sulfuration ou passivation (arbitrairement on adoptera ci-dessous le terme « sulfuration ») pendant l'étape de refroidissement sous hydrogène, introduction d'un composé sulfuré; cette étape peut éventuellement être partiellement confondue avec l'étape précédente.

Il s'agit donc d'un processus complet de régénération de catalyseurs de reformage, en hors site (off-site ou ex-situ), en lit fluidisé, mais où le catalyseur ne circule pas d'une étape à l'autre (ledit catalyseur est dit non-circulant); il circulerait « autour de lui-même », en restant confiné dans le même réacteur pour les différentes étapes de ce traitement. Autrement dit, son chemin statistique moyen pendant le traitement est nul. C'est un procédé "en batch". Les étapes (2), (3) et (4) sont effectuées dans une même zone du réacteur ou du four, les étapes (2) et (3) étant effectuées simultanément ou au moins partiellement ensemble. Notre procédé apparaît également comme un perfectionnement soit de US-A-5,866,495 relatif à la régénération d'un catalyseur de réformage à base de zéolite L, les diverses étapes de combustion, oxyhalogénation et réduction étant effectuées en lit fixe, soit US-A-5,573,988 avec étapes de régénération également en lit fixe.

Les avantages du nouveau procédé selon l'invention sont les suivants :
- procédé batch permettant la flexibilité des étapes : certains catalyseurs contiennent des hydrocarbures, donc sont à stripper au préalable (étape 1), d'autres non,
- procédé batch permettant la flexibilité de la « longueur » des étapes, soit du temps de résidence dans chaque étape. Certains catalyseurs n'ont que 5 % de carbone, d'autres 15 ou 20 %, d'où nécessité de gérer les étapes exothermiques d'enlèvement du carbone dans des conditions variables (ce qu'une boucle classique de CCR ne sait pas faire par exemple),
- procédé batch permettant la flexibilité des étapes de redispersion du platine. Là encore la dispersion du platine sur catalyseur usé peut être variable et nécessiter des temps de séjour ou des conditions variables lors de l'oxychloration,
- procédé batch permettant l'addition d'étapes spécifiques si nécessaires. Un catalyseur empoisonné par le soufre pourrait nécessiter un cycle spécial pour partiellement le désulfurer: opération parfois appelée "shampouinage" à l'hydrogène, qui est une alternance de traitement haute température d'une part sous hydrogène et d'autre part sous oxygène plus éventuellement un halogène, dans le but de désorber une partie du soufre,
- possibilité d'isoler et donc de caractériser des « sous lots » de la taille d'un batch, intéressant pour le contrôle qualité et la traçabilité des ces catalyseurs hétérogènes aux spécifications précises,
- bonne gestion de la « surveillance » du produit contenant des métaux précieux de haute valeur dans le cadre d'un procédé batch. Le catalyseur passe du lieu de stockage à un réacteur unique, y subit tout le cycle de de régénération et retourne au stockage,
- production de fines et poussières confinées à un petit nombre de lieux, en comparaison par rapport à une unité continue comportant plusieurs étapes géographiquement distinctes,
- investissement considérablement réduit,
- meilleur contact gaz solide qu'un four rotatif à simple virole, donc meilleur résultat à l' oxychloration,
- de façon plus générale, si certains types de catalyseurs nécessitaient des séquences de traitement spécifiques, ce type de procédé permettrait d'y répondre avec une grande flexibilité.

Le procédé selon l'invention convient particulièrement bien au traitement de catalyseurs usés contenant du platine tels que ceux issus d'un procédé de traitement de charges pétrolières (par reformage), que ce procédé soit de type à lit fixe ou mobile.

Le procédé de régénération selon l'invention permet au raffineur de résoudre les problèmes posés par la régénération sur site de l'art antérieur. En particulier, ledit procédé permet un meilleur contrôle des deux étapes principales de régénération d'un catalyseur comprenant au moins un moins un métal précieux, de préférence le platine, que sont les étapes de combustion du coke et d'oxychloration. De plus, le procédé de régénération selon l'invention permet une manipulation externe au site réactionnel du catalyseur comprenant au moins un métal précieux. Ceci n'était pas envisagé par l'homme du métier jusqu'à présent, principalement parce que la manipulation d'un catalyseur très coûteux comprenant au moins un métal précieux et l'étape d'oxyhalogénation hors-site, de préférence d' oxychloration hors-site étaient des obstacles difficiles à surmonter.

### Résumé de l'invention

Le procédé de régénération selon l'invention est effectué hors-site, c'est-à-dire qu'il est effectué en dehors de l'unité de réformage catalytique, et plus généralement en dehors du site de la raffinerie. Le catalyseur est sorti des zones réactionnelles de la raffinerie puis régénéré avant son retour dans lesdites zones.

L'étape éventuelle (1) du procédé, le strippage, est utile lorsque le catalyseur contient des hydrocarbures adsorbés dans sa porosité. Ceux-ci doivent être éliminés avant de porter le catalyseur à haute température en atmosphère oxydante. Ce strippage s'effectue, selon la présente invention, soit sous air, soit sous azote, ou un mélange de ces deux gaz.

L'étape (2) de combustion consiste à brûler progressivement le carbone et l'hydrogène, constituants du coke, à température variable, et plus particulièrement, comme indiqué plus haut, faible au début (250-450°C) sous air (éventuellement dilué d'azote), plus forte au palier final (500-550°C), Cette dernière étape s'intègre avec l'étape (3), dite d'oxychloration, ou de redispersion de la phase métallique. Cette étape peut éventuellement être suivie d'une calcination, consistant à l'arrêt d'injection d'eau et de composé chloré, tout en maintenant, voire augmentant, le débit de gaz oxydant, de préférence de l'air. Ensuite peuvent venir de façon optionnelle d'autres étapes de traitement, variables selon le type de catalyseur utilisé. Pour obtenir ensuite un catalyseur activé et prêt à l'emploi dans l'unité catalytique de procéder à une étape (4) de réduction. Elle est réalisée sous hydrogène pur ou dilué après une indispensable purge du réacteur à l'azote, à une température généralement comprise entre 200 et 700°C, et de préférence entre 400 et 550°C. Enfin le catalyseur peut nécessiter une dernière étape, l'étape (5) que plus haut on a appelée arbitrairement « sulfuration ». Ainsi, ce peut être un « fine tuning », par exemple une passivation, ou une sélectivation par ajout de molécules contenant du soufre. Ceci est nécessaire pour certains catalyseurs, notamment ceux qui contiennent du rhénium associé au platine, le rhénium ayant des propriétés hydrogénolysantes qu'il convient d'annihiler par sulfuration sélective. Cette étape s'effectue en présence d'un gaz contenant de préférence de l'hydrogène en présence d'un composé sulfuré. Celui-ci est choisi dans le groupe comprenant les sulfures (mono, di ou polysulfures), le sulfure d'hydrogène, les mercaptans, les composés thiophéniques et tout autre composé contenant du soufre et susceptible de se décomposer en H₂S sous pression d'hydrogène. Cette étape peut être partiellement intégrée avec l'étape précédente, car elle peut être effectuée pendant l'étape de refroidissement sous hydrogène. L'étape éventuelle de sulfuration hors-site est une étape conventionnelle de traitement et un composé sulfuré.

Le procédé selon l'invention comporte donc une étape de réduction suivie éventuellement d'une étape de sulfuration du catalyseur. Mais l'étape de sulfuration peut aussi être réalisée sur le site de la raffinerie, c'est-à-dire sur elle, généralement dans l'unité de réformage catalytique

### Description détaillée

Le catalyseur régénéré selon le procédé de l'invention est un catalyseur comprenant au moins un métal précieux choisi dans le groupe formé par l'argent, l'or, le ruthénium, le rhodium, le palladium, l'osmium, l'iridium et le platine, de préférence le platine, du chlore (généralement de teneur comprise entre 0 et 3 % poids, de préférence entre 0,5 et 1,1 % poids de chlore dans le cas d'un catalyseur usé de réformage catalytique) et au moins un support poreux amorphe et à base d'alumine ledit catalyseur est un catalyseur de réformage catalytique. Le catalyseur régénéré selon l'invention est un solide poreux généralement sous la forme de petits bâtonnets (extrudés), de billes ou de grains, qui comprend le plus souvent de l'alumine, du chlore, du platine et au moins un métal additionnel. Le métal additionnel est généralement choisi dans le groupe formé par les métaux des groupes 7, 8, 9, 10, 13 et 14 de la classification périodique des éléments et le cuivre, tel que le thallium, le manganèse, le germanium, l'indium, l'iridium, le rhénium ou l'étain, de préférence le rhénium, l'iridium ou l'étain.

La préparation du catalyseur régénéré selon l'invention est conventionnelle. Elle comprend généralement une fixation des métaux sur le support au cours d'une imprégnation : le précurseur ionique, soluble dans l'eau, est échangé à la surface du support: le catalyseur est ensuite essoré, filtré et séché ; puis il subit une calcination sous balayage d'air à une température généralement légèrement supérieure à 500°C. Après calcination, le catalyseur doit encore être réduit pour être prêt à l'emploi. Cette opération se déroule à haute température sous pression d'hydrogène. Enfin, avant mise en contact avec les hydrocarbures, il est généralement nécessaire de diminuer l'activité hydrogénolysante des petites particules métalliques par injection d'un composé sulfuré : c'est l'étape éventuelle de sulfuration du catalyseur, à laquelle on procède surtout si le métal additionnel est le rhénium ou l'iridium.

Le catalyseur usé, c'est-à-dire que l'on doit régénérer, comprend généralement au moins 1 % poids de carbone, de préférence entre 3 et 20 % poids. Sa teneur en chlore est généralement comprise entre 0,5 et 1,1 % poids.

Selon la présente invention, l'étape (1) est une étape de strippage des hydrocarbures. Elle est optionnelle dans la mesure où les catalyseurs usés ne contiennent pas tous des hydrocarbures libres. Elle s'effectue dans le réacteur en batch sous azote, sous air dilué, ou sous air pur. Dans le cas où le gaz de traitement est de l'azote, l'opération est endothermique, et elle pourra s'effectuer dans un mode où le lit est non fluidisé. De préférence, on choisira néanmoins une opération à haut débit d'un gaz contenant de l'oxygène, donc en lit fluide, de façon à monter plus rapidement la température du lit. L'opération s'intègre ainsi à l'étape (2) de combustion du carbone, cette étape pouvant être quasi transparente pendant la phase de montée en température en atmosphère oxydante. La teneur en hydrocarbures dans les gaz sortie doit être suffisamment faible pour être en dessous des limites d'explosivité.

Selon la présente invention, l'étape (2) est donc une étape de combustion du coke présent sur ledit catalyseur en présence d'un gaz comprenant de l'oxygène, à température comprise entre 300 et 680 °C, de préférence entre 350 et 550°C, pour une durée comprise entre 0.5 et 10 heures. Dans le cadre du procédé de régénération selon l'invention, cette étape (2) de combustion du coke est effectuée dans un four à lit fluidisé (ou en mouvement). Le gaz utilisé dans l'étape de combustion est soit un mélange d'air et d'azote, soit de l'air pur. Dans tous les cas, le paramètre qu'il convient de suivre avec une très grande vigilance est la température, la réaction de combustion du coke étant évidemment très exothermique. Un tel four à lit fluidisé permet d'utiliser un gros débit de gaz, et ainsi de bien évacuer la chaleur produite contrairement aux procédés à lit fixe tels que ceux décrits dans US-A-5,866,495 ou US-A-5,573,998. Un paramètre important à surveiller également est la teneur en chlore du catalyseur. La teneur en chlore du catalyseur usé avant élimination du carbone est souvent située autour de 1%. L'enjeu lors de l'élimination de carbone est d'éviter que cette teneur ne chute à un niveau trop bas, par exemple en dessous de 0,5% poids. Une condition importante est d'utiliser un gaz (de l'air par exemple) sec. La caractéristique d'humidité de ce gaz peut s'exprimer via le point de rosée ; celui-ci est de préférence inférieur à 10°C, et de manière plus préférée 0°C. Il importe que le catalyseur ne soit pas exposé à de fortes concentrations de CO/CO₂ ou de H₂O, produits de la réaction de combustion, comme c'est le cas des procédés de régénération in-situ. Un four à lit fluide permet d'injecter de grands débits de gaz sec, ce qui limite les concentrations de ces composés, nuisibles à la qualité du produit. Enfin, les points chauds et les chemins préférentiels du gaz sont réduits.

Selon la présente invention, l'étape (3) est une étape d'oxychloration. Elle s'intègre à l'étape (2) facilement puisque le catalyseur reste dans le même réacteur. Elle consiste en un ajout d'eau et de composé chloré, avec le gaz oxydant, permettant la destruction des agrégats métalliques et leur transformation en anions dispersés à la surface du support. L'atmosphère contrôlée du gaz utilisé, notamment d'air, comprend généralement et de façon préférée de 0,1 à 1 % (volume) d'eau, à une température entre 300 et 650 °C, de préférence entre 350 et 550°C, et un composé chloré, un composé comprenant de préférence entre 1 et 6 atomes de carbone et 1 à 6 atomes de chlore par molécule tel que le tétrachlorure de carbone CCl₄, ou le dichloro propane C₃H₄Cl₂. Le contenu final du catalyseur en chlore est supérieur à 0,2% poids et notamment entre 0,8 et 1,9% , et doit généralement être compris, entre 0,9 et 1,2 % poids, de préférence entre 1,0 et 1,1 % poids. La durée de cette étape 3, à titre d'exemple, peut être comprise entre 0,3 et 7 heures.

L'utilisation d'un tel type de four en lit fluide, ou lit fluidisé, pour toutes les étapes de régénération, permet d'améliorer l'homogénéité de traitement du catalyseur, en évitant par exemple la réalisation de chemins préférentiels du gaz traitant. De plus, ladite étape (3) d'oxychloration, peut être réalisée avec une grande flexibilité des conditions opératoires, ainsi il est possible d'opérer dans des conditions surchlorantes, menant à une teneur en chlore du catalyseur au cours de ladite étape d'oxychloration supérieure à 1,5 % poids par exemple. Cette surchloration permet ainsi une grande efficacité dans le redispersion de la phase métallique. Cette teneur en chlore étant en revanche non souhaitée sur le catalyseur final, car conférant des propriétés trop fortement acides au support aluminique, elle peut ensuite être diminuée pour arriver dans la zone de teneur en chlore préférée, admise pour les catalyseurs de réformage, située autour de 0,9 à 1,2% poids.

Les caractéristiques du catalyseur issu de l'étape (3) d'oxychloration, sont généralement les suivantes. La teneur en coke dudit catalyseur est généralement inférieure à 1 %, de préférence inférieure à 0,2 % poids. Comme indiqué plus haut, la teneur en chlore est généralement supérieure à 0,2 % poids d'halogène, et plus particulièrement pour un catalyseur de réformage, ladite teneur est comprise généralement entre 0,8 et 1,9 % poids de chlore, de préférence entre 0,9 et 1,2 % poids de chlore et de manière encore plus préférée entre 1,0 et 1,1 % poids de chlore. La dispersion de la phase métallique doit avoir été sensiblement augmentée par le traitement d'oxychloration. La dispersion s'exprime par une grandeur adimensionnelle, qui est le rapport entré le nombre d'atomes de métal accessibles en surface et le nombre d'atomes total, et elle est mesurée par des techniques de chimisorption quantifiée de gaz, le titrage hydrogène/oxygène. La surface spécifique du catalyseur est généralement peu modifiée par le traitement d'oxyhalogénation, de préférence d'oxychloration. Dans le cas d'un catalyseur de réformage, la surface spécifique est généralement comprise entre 50 et 300 m2/g, et plus souvent entre 120 et 230 m2/g.

### Exemples

Les exemples suivants illustrent l'invention en la comparant à l'art antérieur sans toutefois en limiter la portée. Ils ont été conduits à une échelle de procédé pilote.

### Exemple 1 : Comparatif non conforme à l'invention : régénération en lit fixe

Un catalyseur usé de reformage de naphta à base de 0.25 % en platine et de 0.25 % en rhénium, contient 0,73 % poids de chlore, 14.5 % de carbone et 0.8 % d'hydrocarbures. L'équivalent de 100 g en base oxyde est chargé dans un réacteur adiabatique parcouru d'un courant de gaz préchauffé. Ce gaz peut être l'azote, l'air, un mélange de ces 2 gaz, et peut être additionné de vapeur d'eau ou de dichloropropane comme il sera précisé ci-dessous.

Le catalyseur subit d'abord une étape de désorption des hydrocarbures volatils ou « strippage » (1), puis une étape de combustion du carbone (2), couplée à une étape d'oxychloration (3). On opère comme suit.

La température est portée en 4h à 220°C sous débit de 2001/h d'azote (strippage étape 1). On procède ensuite aux étapes 2 et 3 de combustion et d'oxychloration, lesquelles sont intégrées. A ce niveau, le gaz prend la composition volumique suivante : azote sec à 0.5% d'oxygène, 0.8 % d'eau, 0.04 % de chlore (introduit sous forme de dichloropropane, lequel réagit pour former de l'acide chlorhydrique HCl). La température est montée jusqu'à 350°C en 6h. Un plateau de 1h est observé, puis la teneur en oxygène est portée à 1% pendant 1h, puis à 3% pendant 1h, puis à 5% pendant 1h. Ensuite la température est portée en 1h à 400°C sous mélange à 0.5% d'O2, où des plateaux de 2h sont observés à 0.5, 1, 3, 5% d'O2. Puis 450°C, 490°C et finalement 510°C avec des plateaux de 1h. La teneur en oxygène est ensuite portée à 10% pendant 4h. La température redescend ensuite sous cette atmosphère pendant 2 heures jusqu'à 300°C, puis sans chlore et eau jusqu'à 220°C.

Les résultats obtenus sont rassemblés dans le Tableau 1.

La teneur en carbone est mesurée par un appareil LECO, la surface spécifique est mesurée par méthode BET. La dispersion métallique, mesurée par la quantité d'oxygène adsorbé après réduction sous hydrogène, est exprimée en % d'atomes métalliques de surface. La mesure de la teneur en chlore est effectuée par la technique de conductimétrie (dosage par une solution d'argent, une solution d'acide nitrique à 0,1 N ayant été utilisée pour libérer le chlore de la surface catalytique).

**Tableau 1 : Caractéristiques du catalyseur après combustion du carbone et oxychloration**

| Traitement | Carbone % poids | Chlore % poids | Soufre ppm poids | Surface spécifique (m2/g) | Dispersion du platine (%) |
|---|---|---|---|---|---|
| Etapes 1+2+3 | 0.12 | 1.14 | 42 | 199 | 96 |

Par rapport au catalyseur frais, (c'est-à-dire au catalyseur avant son introduction pour la première fois en zone de réformage catalytique) qui possédait une teneur en chlore de 0,85 % poids, une dispersion de 100 % et une surface spécifique de 203 m2/g, les caractéristiques du catalyseur après oxychloration sont très satisfaisantes, mais la méthode de régénération en lit fixe est longue. Elle est assez bien maîtrisée à l'échelle laboratoire, plus difficile à gérer industriellement, la masse importante de catalyseur et les incertitudes sur la distribution du gaz ne garantissant pas de l'homogénéité parfaite du traitement.

Le produit à l'issue de cette étape est ensuite rechargé dans ce même réacteur de régénération pour subir les étapes suivantes de réduction (4) et sulfuration (5). Environ 9g de catalyseur sont traités par un débit de 20 1/h de mélange hydrogène/azote 50/50, de la température ambiante à 460°C, avec une montée de 6h et un plateau de 2h. La température est redescendue à 400°C, laissée en plateau pendant 6h alors que du Diméthyl Disulfure est introduit à raison de 0.03 grammes/heure. La température baisse ensuite en 2h jusqu'à la température ambiante, le réacteur est purgé à l'azote, puis à l'air. Les résultats analytiques de ce traitement en 5 étapes sont portés dans le tableau 2, si ce n'est la dispersion du platine. Celle-ci en effet n'est plus mesurée de manière fiable après un traitement de sulfuration. Ils sont similaires pour les deux produits, si ce n'est le taux de soufre.

Les résultats obtenus sont rassemblés dans le Tableau 2.

**Tableau 2 : Caractéristiques du catalyseur après combustion du carbone, oxychloration, réduction et sulfuration.**

| Traitement | Carbone % poids | Chlore % poids | Soufre ppm poids | Surface spécifique (m2/g) | Dispersion du platine (%) |
|---|---|---|---|---|---|
| Etapes 1+2+3 | 0.12 | 1.14 | 42 | 199 | 96 |
| Etapes 1+2+3+4+5 | 0.09 | 1.03 | 810 | 201 | - |

### Exemple 2 : Comparatif non conforme à l'invention : régénération en lit fixe sans arrêt intermédiaire

L'exemple 1 est répété dans des conditions analogues. On utilise le même catalyseur et on procède aux mêmes séquences de régénération et oxychloration que celles de l'exemple 1 ; mais ici, à la fin de l'oxychloration, les séquences 4 et 5 de réduction et sulfuration sont enchaînées sans vider le réacteur du catalyseur usé dans ce même réacteur de régénération. Les résultats obtenus sont rassemblés dans le Tableau 3.

**Tableau 3 : Caractéristiques du catalyseur après combustion du carbone, oxychloration, réduction et sulfuration effectuées en lit fixe en série.**

| Traitement | Carbone % poids | Chlore % poids | Soufre ppm poids | Surface spécifique (m2/g) | Dispersion du platine (%) |
|---|---|---|---|---|---|
| Etapes 1+ 2+3+4+5 | 0.10 | 1.08 | 760 | 197 | - |

Les analyses montrent que l'expérience est correctement répétable, que les traitements soient effectués avec une interruption entre les étapes 3 et 4, ou directement en série. La qualité de ce catalyseur est satisfaisante. Les deux inconvénients de la méthode sont le long temps de séjour dans le four, et le fait que cette méthode en série ne permette pas de prélever un échantillon homogène dans le lit catalytique à l'issue de l'étape 3 pour mesurer la dispersion.

### Exemple 3 : Régénération non conforme à l'invention.

Une quantité de 100 g de catalyseur identique à celui utilisé dans les exemples 1 et 2 est utilisée pour réaliser une expérimentation dans un équipement en lit fluide, alimenté par un débit de gaz de 2000 litres/heure, dont la composition varie au cours de la séquence de traitement. Le catalyseur subit d'abord, comme indiqué ci-dessous, l'étape de strippage (1), puis l'étape de combustion du carbone (2), couplée à celle d'oxychloration (3). La température, contrôlée à partir d'un thermocouple disposé dans le lit catalytique, est portée en 1/2 h à 220°C sous débit d'azote (strippage, étape 1). A ce niveau, le gaz prend la composition volumique suivante : azote sec à 5% d'oxygène, 0.8 % d'eau, 0.04 % de chlore. On procède alors à la combustion et à l'oxychloration (étapes 2 et 3) : la température est montée jusqu'à 350°C en 1/2h. Un plateau de 1/2h y est observé. Ensuite la température est portée en 1/2h à 400°C sous mélange à 5% d'O2, puis laissée 1/2h. Puis la même séquence à 450°C, 490°C et finalement 510°C avec des plateaux de 1h. La teneur en oxygène est ensuite portée à 10% pendant 1h. La température redescend ensuite sous cette atmosphère pendant 1/2 heure jusqu'à 300°C, puis sans chlore et eau jusqu'à 220°C.

Le four est déconnecté de son système d'évacuation des gaz et un échantillon est prélevé et analysé : voir la 1^{ère} ligne du tableau 4 (étapes 1+2+3). Le catalyseur ainsi régénéré est ensuite conventionnellement soumis à une réduction puis à une sulfuration, dans le réacteur qui vient d'être utilisé pour les étapes 1, 2 et 3 mais en lit fixe. On opère ici ainsi : après une purge sous azote, un mélange 50/50 d'hydrogène et d'azote est introduit et la température montée en 3 heures à 460°C et laissée 2 heures en plateau. La température est redescendue à 400°C, laissée en plateau pendant 1h alors que du Diméthyl Disulfure est introduit à raison de 0.18 grammes/heure. La température baisse ensuite en 1/2h jusqu'à la température ambiante, le réacteur est purgé à l'azote, puis à l'air. Les résultats obtenus sont rassemblés dans le Tableau 4.

**Tableau 4 : Caractéristiques du catalyseur après combustion du carbone, oxychloration, réduction et sulfuration.**

| Traitement | Carbone % poids | Chlore % poids | Soufre ppm poids | Surface spécifique (m2/g) | Dispersion du platine (%) |
|---|---|---|---|---|---|
| Etapes 1+2+3 | 0.04 | 1.13 | 40 | 203 | 98 |
| Etapes 1+2+3+4+5 | 0.03 | 1.03 | 830 | 201 | - |

### Exemple 4: Régénération, conforme à l'invention, sans arrêt intermédiaire

On répète l'exemple 3, mais ici, à l'issue de l'étape 3 d'oxychloration, on procède directement à une étape 4 de réduction du catalyseur puis à une étape 5 de sulfuration de ce même catalyseur. Ces étapes 4 et 5 sont effectuées successivement en lit fluide dans le même réacteur qui a été utilisé pour les étapes 1, 2 et 3. A noter qu'à l'issue des étapes 1, 2 et 3, il est toutefois toujours possible de prélever un échantillon du catalyseur aux fins d'analyse et dans cet exemple 4, à l'issue de ces étapes 1, 2 et 3, on retrouve sensiblement les mêmes résultats que ceux trouvés à l'exemple 3 et donnés à la 1^{ère} ligne du tableau 4. Ensuite pour effectuer les étapes 4 et 5, on procède dans les conditions opératoires similaires à celles données à l'exemple 3 mais en lit fluide et non en lit fixe. Plus précisément, à l'issue de l'étape 3 d'oxychloration et après une purge de 1/2h sous azote, un mélange 50/50 d'hydrogène et d'azote est introduit à un débit de 2 0001/h et on opère comme à l'exemple 3 : la température est montée en 3 heures à 460°C et laissée 2 heures en plateau. La température est redescendue à 400°C, laissée en plateau pendant 1h alors que du Diméthyl Disulfure est introduit à raison de 0.18 grammes/heure. La température baisse ensuite en 1/2h jusqu'à la température ambiante, le réacteur est purgé à l'azote, puis à l'air. Après cette procédure de régénération et oxychloration d'une durée d'environ 20 heures, le produit intermédiaire et le produit final sont analysés. Un avantage de cette technologie est cet échantillonnage intermédiaire pour caractériser le produit après oxychloration, la dispersion du platine étant l'analyse clef de toute cette séquence, ce critère étant le plus important dans l'application du reformage catalytique. La qualité du produit est supérieure à celle des produits obtenus aux exemples 1 et 2 précédents (avec une souplesse et un confort supérieurs par rapport à la technique de l'exemple 3 où les étapes de réduction et sulfuration du catalyseur sont effectuées en lit fixe et non en lit fluide). Les résultats obtenus sont rassemblés dans le Tableau 5.

**Tableau 5 : Caractéristiques du catalyseur après combustion du carbone, oxychloration, réduction et sulfuration.**

| Traitement | Carbone % poids | Chlore % poids | Soufre ppm poids | Surface spécifique (m2/g) | Dispersion du platine (%) |
|---|---|---|---|---|---|
| Etapes 1+2+3 | 0.06 | 1.08 | 40 | 202 | 97 |
| Etapes 1+2+3+4+5 | 0.04 | 1.02 | 880 | 205 | - |

Le temps global, par rapport à l'art antérieur, a été, certes, raccourci dans l'exemple 3 mais plus spécialement dans l'exemple 4 grâce à la grande quantité de gaz injecté, une plus grande stoechiométrie de réactifs, un meilleur contact gaz/solide, et notamment une plus grande rapidité de changement de température. Le catalyseur est perpétuellement mobile, donc on évite les points chauds, qui se manifestent en lit fixe, quand on veut raccourcir les étapes.

Bref, opérer selon l'exemple 4, apporte un gain économique considérable lorsqu'on opère industriellement, chaque année, sur des dizaines, voire des centaines de tonnes de catalyseurs. D'autre part, la qualité du produit est supérieure sur des opérations en lit mobile de par une meilleure homogénéité grain à grain. En particulier pour les opérations de réduction et sulfuration, cette dernière opération requérant un dosage le plus précis possible grain à grain. Enfin le lit mobile permet de réaliser des échantillonnages réguliers, ce qui permet d'optimiser la conduite du procédé.

## Revendications

1. Procédé de régénération de catalyseurs usés de réformage d'hydrocarbures, le catalyseur comprenant au moins un métal précieux choisi dans le groupe formé par les éléments du groupe VIII, l'or et l'argent, du chlore et au moins un support poreux, amorphe et à base d'alumine, procédé comportant au moins les étapes suivantes :
- au moins une étape de combustion du coke présent sur ledit catalyseur en présence d'un gaz comprenant de l'oxygène moléculaire, à température comprise entre 300 et 680°C, et pour une durée comprise entre 0,5 et 10 heures,
- au moins une étape d'oxychloration en présence d'un composé chloré sous atmosphère contrôlée d'air humide, à une température comprise entre 300 et 650°C,
- une étape de réduction ,
ces étapes étant réalisées « hors site » dans une même zone unique de régénération dans laquelle le catalyseur à régénérer s'y trouve sous la forme d'un lit non circulant fluidisé ou en mouvement, et l'étape d'oxychloration est partiellement confondue avec la fin de l'étape de combustion ou les étapes de combustion et oxychloration sont réalisées simultanément.

2. Procédé selon l'une des revendications précédentes dans lequel l'étape de combustion progressive du coke est effectuée sous air à température variable, au début de 250-450°C et au palier final à 500-550°C.

3. Procédé selon l'une des revendications précédentes appliqué à la régénération d'un catalyseur de reformage et comportant les étapes suivantes :
- (1) éventuel strippage sous air, sous azote, ou un mélange de ces deux gaz,
- (2) combustion progressive,
- (3) oxychloration éventuellement suivie d'une calcination,
- (4) réduction sous hydrogène
- (5) éventuelle sulfuration

4. Procédé selon la revendication 3comportant les étapes suivantes :
- (1) strippage sous air, sous azote, ou un mélange de ces deux gaz,
- (2) combustion progressive,
- (3) oxychloration éventuellement suivie d'une calcination,
- (4) réduction sous hydrogène
- (5) éventuelle sulfuration

5. Procédé selon la revendication 3 ou 4 dans lequel l'étape (3) est une oxychloration suivie d'une calcination.

6. Procédé selon l'une des revendications 3,4 ou 5 comprenant une étape (5) de sulfuration.

7. Procédé selon les revendications 4 à 6 dans lequel toutes les étapes sont réalisées dans le même réacteur.

8. Procédé selon l'une des revendications précédentes dans lequel le catalyseur usé est soumis à un éventuel strippage, une étape de combustion, une étape d'oxychloration, une étape de réduction éventuellement une étape de sulfuration, et dans lequel on procède à un shampouinage dudit catalyseur.

9. Procédé selon l'une des revendications précédentes dans lequel l'étape d'oxychloration consiste en un ajout d'eau, et de composé chloré avec de l'air.

10. Procédé selon l'une des revendications précédentes dans lequel l'atmosphère contrôlée dans l'étape d'oxychloration contient 0,1 à 1% volume d'eau.

11. Procédé selon l'une des revendications précédentes dans lequel l'étape de réduction est réalisée sous hydrogène pur ou dilué après purge du réacteur à l'azote, et à une température de 400-550°C.

12. Procédé selon l'une des revendications précédentes appliqué à la régénération d'un catalyseur de réformage et comportant après la réduction (4) une étape (5) de sulfuration par introduction d'un composé sulfuré pendant l'étape de refroidissement sous hydrogène.

13. Procédé selon la revendication 12 dans lequel le catalyseur contient du rhénium associé au platine.

14. Procédé selon l'une des revendications précédentes dans lequel l'étape de combustion utilise un gaz sec dont le point de rosée est inférieur à 10°C.

## Claims

1. Process of regeneration of spent catalysts from hydrocarbon reforming, the catalyst comprising at least one precious metal selected from the group formed by elements of group VIII, silver, and gold, chlorine and at least one amorphous porous support, with an alumina base, said process comprising at least the following steps:
- at least one step for combustion of coke present on said catalyst in the presence of a gas comprising molecular oxygen, at a temperature between 300 and 680°C, for a duration between 0.5 and 10 hours,
- at least one oxychlorination step, in the presence of a chlorinated compound under controlled atmosphere of humid air, at a temperature between 300 and 650°C,
- a reduction step,
these steps being performed "off-site" in the same, single regeneration zone in which the catalyst to be regenerated is found in the form of a not circulating fluidized bed or a moving bed, process wherein the oxychlorination step is partially mixed with the end of the combustion step or wherein the step of combustion and oxychlorination are performed simultaneously.

2. Process according to one of the preceding claims, wherein the step of progressive combustion is performed by heating to 250-450°C under air up to a final stage at 500-550°C.

3. Process according to one of the preceding claims, applied to the regeneration of a reforming catalyst and comprising the following steps:
- (1) optional stripping under air, under nitrogen, or a mixture of these two gases,
- (2) progressive combustion,
- (3) oxychlorination, optionally followed by calcination,
- (4) reduction under hydrogen,
- (5) optional sulfurization.

4. Process according to one of the preceding claims, applied to the regeneration of a reforming catalyst and comprising the following steps:
- (1) stripping under air, under nitrogen, or a mixture of these two gases,
- (2) progressive combustion,
- (3) oxychlorination, optionally followed by calcination,
- (4) reduction under hydrogen,
- (5) optional sulfurization.

5. Process according to one of the claims 3 or 4 wherein step (3) is an oxychlorination, followed by calcination.

6. Process according to one of the claims 3,4 or 5 comprising a step(5) of sulfurization.

7. Process according to any one of the claims 4 to 6 , wherein all the steps are performed in the same reactor.

8. Process according to one of the preceding claims, wherein the spent catalyst is subjected to an optional stripping, a combustion step, an oxychlorination step, a reduction step, optionally a sulfurization step, and wherein one proceeds to a shampooing of said catalyst.

9. Process according to one of the preceding claims wherein the step of oxychlorination consists in an addition of water, and of chlorinated compound with air.

10. Process according to one of the preceding claims wherein the controlled atmosphere in the oxychlorination step contains 0.1 to 1% by volume of water.

11. Process according to one of the preceding claims wherein the reduction step is carried out under hydrogen, pure or diluted, after purging of the reactor with nitrogen, and at a temperature of 400-500°C.

12. Process according to one of the preceding claims applied to the regeneration of a reforming catalyst and comprising after the reduction (4) a step (5) of sulfurization by introduction of a sulfur compound during the step of cooling under hydrogen.

13. Process according to the claim 12 wherein the catalyst contains rhenium associated with platinum.

14. Process according to one of the preceding claims wherein the combustion step uses a dry gas whose dew point is lower than 10°C.

## Patentansprüche

1. Verfahren zur Regeneration von gebrauchten Katalysatoren zur Umwandlung von Kohlenwasserstoffen, wobei der Katalysator mindestens ein Edelmetall umfasst, ausgewählt aus der Gruppe gebildet aus den Elementen der Gruppe VIII, Gold oder Silber, Chlor und mindestens einen porösen, amorphen und auf Aluminiumdioxid basierenden Träger, wobei das Verfahren mindestens die beiden folgenden Schritte umfasst:
- mindestens einen Schritt zur Verbrennung des Koks, der auf dem Katalysator vorhanden ist, in Gegenwart eines Gases, das molekularen Sauerstoff umfasst, bei einer Temperatur im Bereich zwischen 300 und 680 °C und für eine Dauer im Bereich zwischen 0,5 und 10 Stunden,
- mindestens einen Schritt zur Oxychlorierung in Gegenwart einer chlorhaltigen Verbindung unter kontrollierter Feuchtluftatmosphäre bei einer Temperatur im Bereich zwischen 300 und 650 °C,
- einen Schritt zur Reduktion,
wobei diese beiden Schritte in einer einzigen Regenerationszone ausserhalb der Anlage durchgeführt werden, in der sich der zu regenerierende Katalysator in Form eines nicht zirkulierenden oder in Bewegung befindlichen Fließbetts befindet, und wobei der Schritt zur Oxychlorierung teilweise zusammen mit dem Ende des Schritts zur Verbrennung erfolgt, oder bei dem die Schritte zur Verbrennung und Oxychlorierung gleichzeitig durchgeführt werden.

2. Verfahren nach einem der vorhergehenden Ansprüche, bei dem der Schritt der stufenweisen Verbrennung des Koks unter Luft bei variabler Temperatur durchgeführt wird, zu Beginn bei 250-450 °C und in der letzten Stufe bei 500-550 °C.

3. Verfahren nach einem der vorhergehenden Ansprüche, das auf die Regeneration eines Reformingkatalysators angewendet wird und das die folgenden Schritte umfasst:
- (1) gegebenenfalls Strippen unter Luft, unter Stickstoff oder unter einem Gemisch aus diesen beiden Gasen,
- (2) stufenweise Verbrennung,
- (3) Oxychlorierung, gegebenenfalls gefolgt von einer Kalzinierung,
- (4) Reduktion unter Wasserstoff,
- (5) gegebenenfalls Sulfuration.

4. Verfahren nach Anspruch 3, das die folgenden Schritte umfasst:
- (1) Strippen unter Luft, unter Stickstoff oder unter einem Gemisch aus diesen beiden Gasen,
- (2) stufenweise Verbrennung,
- (3) Oxychlorierung, gegebenenfalls gefolgt von einer Kalzinierung,
- (4) Reduktion unter Wasserstoff,
- (5) gegebenenfalls Sulfuration.

5. Verfahren nach Anspruch 3 oder 4, bei dem Schritt (3) eine Oxychlorierung gefolgt von einer Kalzinierung ist.

6. Verfahren nach einem der Ansprüche 3, 4 oder 5, das einen Schritt (5) zur Sulfuration umfasst.

7. Verfahren nach einem der Ansprüche 4 bis 6, bei dem alle Schritte im gleichen Reaktor durchgeführt werden.

8. Verfahren nach einem der vorhergehenden Ansprüche, bei dem der gebrauchte Katalysator gegebenenfalls einem Stripping, einem Schritt zur Verbrennung, einem Schritt zur Oxychlorierung, einem Schritt zur Reduktion, gegebenenfalls einem Schritt zur Sulfuration unterzogen wird, und bei dem eine Shampoonierung des Katalysator vorgenommen wird.

9. Verfahren nach einem der vorhergehenden Ansprüche, bei dem der Schritt zur Oxychlorierung aus dem Zugeben von Wasser und einer chlorhaltigen Verbindung zur Luft besteht.

10. Verfahren nach einem der vorhergehenden Ansprüche, bei dem die kontrollierte Atmosphäre im Schritt zur Oxychlorierung 0,1 bis 1 % Volumen Wasser enthält.

11. Verfahren nach einem der vorhergehenden Ansprüche, bei dem der Schritt zur Reduktion unter reinem Wasserstoff oder verdünnt, nach dem Spülen des Reaktors mit Stickstoff, und bei einer Temperatur von 400 - 550 °C durchgeführt wird.

12. Verfahren nach einem der vorhergehenden Ansprüche, das auf die Regeneration eines Reformingkatalysators angewendet wird und nach der Reduktion (4) einen Schritt (5) zur Sulfuration durch Einführen einer schwefelhaltigen Verbindung während des Schritts zur Abkühlung unter Wasserstoff umfasst.

13. Verfahren nach Anspruch 12, bei dem der Katalysator mit Platin assoziiertes Rhenium enthält.

14. Verfahren nach einem der vorhergehenden Ansprüche, bei dem der Schritt zur Verbrennung ein Trockengas verwendet, dessen Taupunkt unterhalb von 10 °C liegt.
